# EUROPEAN PATENT APPLICATION

(11) **EP 4 764 063 A1**
(43) Date of publication of application: **24.06.2026**
(21) Application number: 24222202.4
(22) Date of filing: 20.12.2024
(51) Int. Cl.: D21H 17/16, C08B 31/04, D21H 19/38, D21H 19/40, D21H 19/54, D21H 21/16, D21H 21/52, D21H 27/10

(54) **MULTI-BARRIER PAPER-BASED PACKAGING MATERIAL**

(71) Applicant: Ahlstrom Oyj, 02150 Espoo (FI)
(72) Inventor: Laiti, Erkki, 38780 Pont-Evêque (FR)
(74) Representative: Hoffmann Eitle

(57) **Abstract**

The present invention relates to a packaging material comprising a paper substrate and a coating, the paper substrate having a Bendtsen permeability of less than 20.0 ml/min and the coating comprising C₆-C₁₈ alkenyl succinic anhydride modified starch, platy pigment having an average aspect ratio of 100-3000 and optionally plasticizer. The invention further relates to the use of the packaging material for food packaging and to a method of manufacturing the packaging material.

## Description

### TECHNICAL FIELD

The present invention relates to a packaging material comprising a paper substrate and a biobased coating that provides multi-barrier properties against oxygen, grease and moisture. The invention further relates to the use of the packaging material for food packaging and to a method of manufacturing the packaging material.

### BACKGROUND ART

The implementation of multi-barrier properties is a mandatory requirement for the protection of food and other sensitive products, ensuring an extended shelf life and product integrity. Materials offering barrier properties against oxygen, grease and moisture concurrently are typically composed of petrol-based polymer films, metallic laminates or a combination of both. While these materials can be adjusted to be safe for food contact, the use of petrol-based polymer and metallic laminates in packaging materials presents significant challenges related to environmental sustainability. They are notoriously difficult to recycle, often requiring complex sorting and processing methods. Furthermore, they are not biodegradable when left in nature and contribute significantly to global pollution, especially in terms of the accumulation of microplastic waste in the environment, particularly in the oceans.

In response to these concerns, paper-based packaging materials have gained increasing interest as a more environmentally friendly alternative. However, paper-based materials are fiber base sheets generally comprising cellulose. As cellulose is very polar, barrier properties against moisture are poor. In addition, such fiber base sheets have a rather open porous structure, making it easy for gas molecules to pass and grease to penetrate the substrate. To achieve barrier properties in a paper-based packaging material, it is therefore mandatory to modify the paper substrate.

Current state-of-the-art paper-based packaging solutions still incorporate petrol-based polymer coatings or metallic laminates to enhance their barrier performance, which diminishes their recyclability and complicates waste management. On the other hand, current paper packaging materials without petrol-based polymer or metallic laminates still fall short in replicating the barrier properties of traditional packaging materials that are made of petrol-based polymer and metallic laminates. In other words, while biopolymer-based coatings on paper substrates are known to achieve grease and moisture barrier properties, they fail to achieve sufficient barrier properties against gases, and in particular oxygen, which limits their use in applications requiring high-performance packaging. Another attempt to provide multi-barrier properties is the application of multilayer coatings on a base paper substrate. However, this introduces additional challenges as these multilayer structures increase production costs and still pose recycling challenges, as they require the separation of the different layers.

Consequently, while efforts to replace conventional packaging materials made of petrol-based polymer films and metallic laminates have been made, achieving comparable barrier properties with a base paper substrate without compromising recyclability, cost-efficiency, and environmental impact remains a significant challenge in the field.

### TECHNICAL PROBLEM

Paper-based packaging materials require the addition of barrier layers to a paper substrate. However, petrol-based components or metallic laminates reduce recyclability. Known biopolymer-based coatings only provide sufficient barrier properties against some external factors, so the application of more than one coating layer on the paper substrate is required to provide sufficient multi-barrier properties, which complicates waste management. All in all, it is a significant challenge to develop a paper-based packaging material that not only matches the performance of conventional packaging solutions but also minimizes environmental impact, improves recyclability, and maintains cost-effectiveness in production.

In view currently used paper-based packaging materials, it is very difficult to achieve multi-barrier properties with a single biopolymer-based coating, because the requirements for a barrier against liquids and gases are substantially different, especially when it comes to a barrier against hydrophobic gases such as oxygen and hydrophilic gases such as water vapour. In other words, while liquids can be prevented from penetrating a fibrous substrate by reducing the pore size, gases can even penetrate a non-porous substrate if they are not repelled by the chemical nature of the substrate.

In view of the above, there is a demand for a packaging material that provides barrier properties comparable to conventional packaging materials, without the drawbacks associated with petrol-based polymer films, metallic laminates or multilayer coatings. Specifically, there is a need for a packaging material that offers effective protection against oxygen, grease and moisture concurrently, while being biodegradable, recyclable and safe for food contact and other sensitive products.

### SUMMARY OF THE INVENTION

The present invention relates to a packaging material comprising a paper substrate and a biobased coating that provides multi-barrier properties against moisture, grease and oxygen concurrently without any petrol-based content or metallic laminates.

An object of the present invention is the provision of a packaging material as described in detail below. The packaging material comprises a paper substrate and a coating. The paper substrate has a first side and a second side, the second side being opposite to the first side. This paper substrate has a very low Bendtsen permeability (less than 20.0 ml/min). The coating includes a C₆-C₁₈ alkenyl succinic anhydride modified starch, a platy pigment, and optionally a plasticizer. The platy piment has an average aspect ratio of 100-3000. It has been found that coating a base paper substrate having a low Bendtsen permeability of less than 20.0 ml/min with a coating according to the invention, barrier properties not only against grease and moisture (vapor) can be achieved but also against oxygen. As shown below, such high-performance multi-barrier properties can be achieved with just a single layer of coating. In the present invention, a high value in rating according to KIT test indicates improved grease resistance, a low moisture vapor transmission rate (MVTR) indicates improved moisture barrier properties, and a low oxygen transmission rate (OTR) indicates improved oxygen barrier properties.

The coating according to the invention comprises starch that is chemically modified with a C₆-C₁₈ alkenyl succinate substituent as described below and a pigment having a platy geometry as defined below. The inventors of the present invention have found that such a coating achieves multi-barrier properties (against oxygen and grease and optionally water vapor) for various base papers when they have a Bendtsen permeability of less than 20.0 ml/min. Without wishing to be bound by theory, it is believed that the lower the Bendtsen permeability of the paper substrate, the more the penetration of the coating composition into the base paper will be limited and the risk of cracking of the coating surface during drying will be reduced, even when using low coating amounts. This in turn leads to a homogeneous mixture of the modified starch and the platy pigment and a high degree of orientation of the platy pigment along the coating direction, resulting in a Bendtsen permeability of 0.0 ml/min in the packaging material, thereby achieving a very low oxygen transmission rate (OTR).

As the packaging material according to the invention does not require petrol-based polymer films, metallic laminates or multilayer coatings, it can be recycled according to EN13430 and is biodegradable at least according to EN13432, preferably biodegradable under domestic conditions as defined below.

Another object of the present invention is the provision of a method of manufacturing the packaging material. This method comprises the steps of providing a paper substrate and applying the coating composition on at least the first side or the second side of the paper substrate to form the coating. The paper substrate has a Bendtsen permeability of less than 20.0 ml/min when measured according to ISO 5636-3:2013 standard. Furthermore, the coating composition is an aqueous composition having a Brookfield viscosity at 30°C at 100 rpm of 200-2000 mPa·s. The coating composition comprises C₆-C₁₈ alkenyl succinic anhydride modified starch and a platy pigment having an average aspect ratio of 100-3000 or a precursor thereof, and optionally a plasticizer. The platy pigment according to the invention may either already be provided in the coating composition or may be generated in the aqueous dispersion during mixing by exfoliation.

### BRIEF DESCRIPTION OF FIGURES

Figure 1 is a schematic illustration of the packaging material (100) according to the invention.
Figure 2a is a reaction scheme showing the preparation of C₈ alkenyl succinic anhydride modified starch.
Figure 2b is a schematic illustration of the different properties in C₈ alkenyl succinic anhydride modified starch.
Figure 3 is a schematic illustration of the layered structure formed by the platy pigment in the coating of the invention.

### DETAILED DESCRIPTION OF THE INVENTION

### Definitions

In the present invention, the term "average" denotes mean average, unless stated otherwise.

In the present invention, references to amounts "by weight" are intended to be synonymous with "by mass". Further, as used herein, the term weight percent (wt%) refers to a percentage amount by weight.

Where the present description refers to "preferred" embodiments/features, combinations of these preferred embodiments/features shall also be deemed as disclosed as long as this combination is technically meaningful.

Hereinafter, the use of the term "comprising" should be understood as disclosing in a non-limited way, that is to say that additional components or steps can be present or implemented, as long as this is technically meaningful. For a more restricted embodiment, the terms "consisting of" will be used and have to be understood as disclosing in a limited way, that is to say without any additional component or step.

In the present invention, the term "polymer" denotes a compound comprising at least ten repeating units such as, for example, a homopolymer, a copolymer, a graft copolymer, a branch copolymer or a block copolymer.

As used in the present invention the expressions "biobased coating" and "biopolymer-based coating" may be used interchangeably and refer to a coating comprising a biodegradable polymer, wherein a definition of "biodegradability" is provided below.

The term "two-dimensional" as used herein refers to structures that are defined by a certain degree of extension of two of the dimensions height, length and width. In a two-dimensional structure, a body is extended in its width and length relative to its height (thickness). To give specific examples, a wire represents a body which is extended in only one dimension, i.e. along the length of the wire relative to the other dimensions. A sheet or a plate as defined above are two dimensional. Taking into account the previous explanation, the dimensionality may for further exemplification be described by the aspect ratio. The aspect ratio (*L*/*D*) of an object is defined as the ratio of its longest dimension to shortest dimension. For rodlike particles such as carbon nanotubes and nanowires, the aspect ratio is simply the ratio of the length to the diameter (*L*/*D*)*,* whereas for platy pigment such as flake shaped particles it is taken to be the ratio of the largest lateral dimension to sheet thickness. The aspect ratio of the platy pigment can be determined by Scanned Electron Microscopy (SEM) pictures. For example, the largest lateral dimension can be determined with a top view of the paper substrate holding the coating and the thickness (shortest dimension) can be determined by a SEM picture in cross section. In the case the platy pigments are too small in order to use SEM pictures, the man skilled in the art can use Transmission Electron Microscopy (TEM) pictures.

### Packaging Material

The present invention relates to a packaging material comprising a paper substrate having a first side and a second side, the second side being opposite to the first side, wherein the paper substrate has a Bendtsen permeability of less than 20.0 ml/min. The packaging material further comprises a coating being coated on at least the first side or the second side of the paper substrate and comprising C₆-C₁₈ alkenyl succinic anhydride modified starch, platy pigment and optionally plasticizer. The platy pigment has an average aspect ratio of 100-3000.

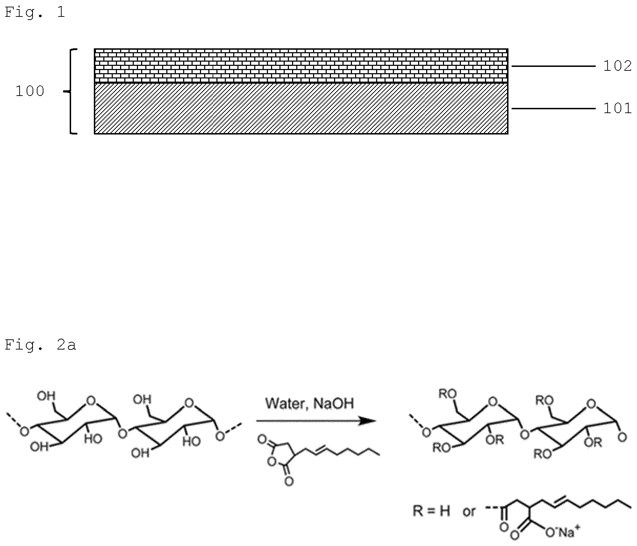

With reference to Figure 1, the packaging material 100 according to the invention, comprises a paper substrate 101 as defined below having a first side and a second side, the second side being opposite to the first side, and a coating 102 as defined below being coated on at least the first side or the second side of the paper substrate. In other words, the packaging material 100 according to the invention may also comprise the coating 102 on both sides (not shown in the figures) of the paper substrate 101.

The packaging material 100 may have a Bendtsen permeability of 0.0 ml/min when measured according to ISO 5636-3:2013 standard. This packaging material 100 has an oxygen transmission rate, determined at 23°C and 50% RH of less than 5 cm³/m².24h. The packaging material 100 can have a grease resistance according to KIT test of at least 7, preferably of at least 11. The packaging material 100 may have a water vapor transmission rate, determined at 23°C and 50% RH, of less than 15 g/m².24h. Furthermore, the oxygen-barrier packaging material 100 can be biodegradable according to EN 13432 standard and/or recyclable according to EN 13430 standard.

### Paper substrate

The term "paper substrate" as used herein refers to planar element such as a two-dimensional sheet of paper having a first side and a second side, the second side being opposite to the first side.

The paper substrate of the present invention refers to a base paper before the coating described below. The terms "paper substrate", "base paper" and "base paper substrate" may be used interchangeably for the purposes of the present invention unless otherwise specifically indicated.

In the present invention, the paper substrate is preferably a cellulose fiber base sheet.

The term "fiber" as used herein refers to a material form characterized by an extremely high ratio of length to diameter. Generally, cellulose fibers have a very broad range of diameters and length based on fiber type and source of fiber. The average length of a wood pulp fiber as preferably used in the present invention is typically in the range of between from 0.3 mm to 5.0 mm, preferably from 0.3 mm to 3.0 mm, more preferably from 0.8 mm to 2.5 mm and even more preferably from 1.0 mm to 2.0 mm. The diameter of a wood pulp fiber is typically in the range of from 10 µm to 40 µm, preferably from 15 µm to 35 µm and more preferably from 20 µm to 30 µm. The aspect ratio (ratio of fiber length to fiber diameter) of a wood pulp fiber is therefore typically in the range of from 7.5 to 350, preferably from 7.5 to 300, more preferably from 10 to 200 and even more preferably from 20 to 150.

The term "cellulose fiber base sheet" refers to a non-woven fiber base sheet having a structure of individual fibers which are interlaid, but not in an identifiable manner as in a woven or knitted fabric, wherein the non-woven fiber base sheet is derived or prepared from cellulose fibers. A cellulose fiber is a fiber comprised substantially of cellulose. Non-woven materials can be formed from many processes such as, for example, spin laying, carding, air laying and water laying processes. The basis weight of non-woven materials such as a cellulose fiber base sheet is usually expressed in weight per unit area, for example in grams per square meter (gsm = g/m²) or ounces per square foot (osf).

The cellulose fiber base sheet used in the present invention is preferably a wet-laid paper sheet. Cellulose fiber base sheets be used in embodiments of the present invention are preferably cellulose fibers from natural sources (for example, native cellulose fibers).

The term "native cellulose fibers" refers to cellulose fibers from natural sources such as woody plants including deciduous and coniferous trees or non-woody plants including cotton, flax, esparto grass, kenaf, sisal, abaca, milkweed, straw, jute, hemp and bagasse. The cellulose fibers can be unbleached or bleached cellulose fibers. Preferably, the native cellulosic fibers used in the present invention are derived from woody plants and may be chosen hardwood and/or softwood pulp. Hardwood can be produced from Eucalyptus , Birch, Aspen for examples. Softwood can be produced from Pine, Spruce for example. The native cellulosic fibers form a crystalline material comprising a crystallized fraction with the crystalline form of Cellulose I comprising all-parallel-oriented cellulose chains. Furthermore, the cellulose fibers can come from chemical pulp, mechanical pulp, thermomechanical pulp or chemi-thermomechanical pulp.

Preferably, the cellulose fiber base sheet is a wood pulp paper sheet. The paper substrate used in the present invention may comprise natural hardwood fibers, preferably eucalyptus fibers. The paper substrate may comprise hardwood fibers in an amount of 20 wt% or more, preferably 30 wt% or more, and more preferably 35 wt% or more relative to the total amount of fibers in the cellulose fiber base sheet. Adjusting the amount of hardwood fibers contributes to the formation of the sheet of paper and the dimensional stability of the sheet of paper.

Further, the paper substrate used in the present invention preferably comprises natural softwood fibers contributing to mechanical strength of the paper. Preferably the paper substrate comprises softwood fibers in an amount of 10 wt% or more, more preferably 20 wt% or more, even more preferably 25 wt% or more relative to the total amount of fibers in the cellulose fiber base sheet. The paper substrate may comprise softwood fibers in an amount of 80 wt% or less, preferably 70 wt% or less, and preferably 65 wt% or less relative to the total amount of fibers in the cellulose fiber base sheet.

In a preferred embodiment of the present invention, the paper substrate is made of natural cellulosic fibers, from the viewpoint of biodegradability. It is particularly preferable that the paper substrate is biodegradable. The paper substrate therefore preferably contains no more than 10 wt% of non-biodegradable material or material of undetermined compostability in order to meet the requirements of the EN13432 standard. It is even more preferable that the paper substrate is more than 90% biodegradable, for example more than 95%, more than 98%, more than 99%, or 100% biodegradable, that is, that the paper substrate contains less than 10 wt%, less than 5 wt%, less than 2 wt%, less than 1 wt%, or 0 wt% of non-biodegradable material or material of undetermined compostability. Most preferably, any additives added to the paper substrate are compostable. The paper substrate preferably comprises at least 50 wt% of cellulosic fibers, preferably at least 60 wt% of cellulosic fibers, more preferably at least 85 wt% of cellulosic fibers, and even more preferably at least 90 wt% of cellulosic fibers. In a more preferable embodiment, at least 95 wt% and most preferably 100 wt% of the fibers in the paper substrate are natural cellulosic fibers.

The diameter of the cellulose fibers is preferably 10 µm to 40 µm, more preferably from 15 µm to 35 µm and even more preferably from 20 µm to 30 µlm. The length of the cellulose fibers is preferably 0.3 mm to 5.0 mm, more preferably from 0.3 mm to 3.0 mm, even more preferably from 0.8 mm to 2.5 mm and most preferably from 1.0 mm to 2.0 mm. Therefore, the average aspect ratio (ratio between the length and the diameter of the cellulose fibers) is preferably 7.5 to 350, more preferably from 7.5 to 300, even more preferably from 10 to 200 and most preferably from 20 to 150.

Typically, the paper substrate will not have fillers. In particular, a total amount of titanium dioxide, calcium carbonate, and clay in the paper substrate is preferably not more than 5 wt%, more preferably not more than 2 wt%, even more preferably not more than 1 wt%. More preferably, a total amount of fillers in the paper substrate is not more than 2 wt%, more preferably not more than 1 wt%, even more preferably not more than 0.5 wt%.

Preferably, the cellulosic fibers described above are obtained by refining a pulp to have a desired refining degree (defined herein as Schopper Riegler number, °SR). The "refining degree" or "refining level" is a measure of the drainability of a paper. The higher the refining degree, the closer the pore structure and the lower the porosity. Without wishing to be bound by theory, the refining level correspondingly affects coating performance in such a way that the higher the refining degree, the less coating penetrates the paper substrate, i.e. the more coating remains on the surface. More preferably, the cellulosic fibers are refined to 30 °SR or more, further preferably to 35 °SR or more, further preferably to 40 °SR or more, and most preferably to 55 °SR or more, and to 90 °SR or less, even more preferably to 80 °SR or less as measured according to ISO 5267. When the refining degree is within the above ranges, good barrier and mechanical properties can be achieved in the final packaging material. However, a too high refining degree, such as above 90 °SR, may reduce the mechanical properties.

The paper substrate has Bendtsen permeability of less than 20.0 ml/min, which is determined by using a Bendtsen permeability tester, which calculates the permeability of a sample by forcing air through said sample and measuring the rate of flow according to the ISO 5636-3:2013 standard. The inventors of the present invention observed that a Bendtsen permeability of the paper substrate that is within the above range allows to achieve oxygen barrier properties when applying the coating composition described below.

When the Bendtsen permeability of the paper substrate is of 20.0 ml/min or higher, OTR remains high despite a coating according to the invention and oxygen barrier properties are not sufficient. Preferably, the paper substrate has Bendtsen permeability of 15.0 ml/min or less, even more preferably 10.0 ml/min or less, and most preferably of 0.0 ml/min, when measured according to ISO 5636-3:2013 standard. A value of 0.0 ml/min corresponds to a Bendtsen permeability that is undetectable according to ISO 5636-3:2013. Without wishing to be bound by theory, it is believed that a low Bendtsen permeability of the paper substrate allows the coating composition to be applied in a particularly sufficient manner, limiting the penetration in the base paper which favors the barrier development at a given coat weight. In other words, the coating composition remains on the surface and a more uniform coating is achieved. In this way a homogenous mixture of the modified starch and the platy pigment results. Furthermore, this results in a particular beneficial arrangement of the platy pigment in this mixture, wherein the platy pigment can orient along the coating direction, i.e. parallel to the base paper. This high orientation results in a Bendtsen permeability of 0.0 ml/min in the packaging material 100 whereby high-performance oxygen barrier properties are achieved.

The paper substrate preferably has a Bendtsen roughness of less than 400 ml/min, and more preferably less than 250 ml/min. Moreover, the paper substrate preferably has a Bendtsen roughness of more than 50 ml/min, preferably of more than 100 ml/min. The Bendtsen roughness is determined according to ISO 8791-2 :2013 standard. When the paper substrate has a Bendtsen roughness of less than 400 ml/min, this surface is very smooth. This allows the amount of coating composition required for forming a uniform coating layer over the entire surface of the paper substrate to be reduced without increasing the risk of cracking of the coating surface during drying.

The paper substrate preferably has a Water Cobb value at 60 seconds as measured according to ISO 535 on the first and/or on the second side of the paper substrate of 50 g/m² or less and more preferably of less than 35 g/m². The Cobb value reflects the hydrophobic properties of the paper substrate. In other words, setting the Cobb to low values alone does not guarantee high performance multi-barrier properties, particularly with respect to non-polar gases such as oxygen. When the Cobb value is within above limits, coating performance is improved in a way that the lower the Cobb value, the fewer coating penetrate the base paper substrate but stays at the surface. Furthermore, Cobb values within these limits enable to control the absorption of the water contained in the coating into the paper substrate contributing to the formation of a coating layer of good quality (i.e. with very low defects).

Preferably, the paper substrate has a basis weight of 20 g/m² or more, preferably 30 g/m² or more, more preferably 35 g/m² or more, and even more preferably 40 g/m² or more. Moreover, the paper substrate preferably has a basis weight of 250 g/m² or less, preferably 200 g/m² or less, more preferably 180 g/m² or less, more preferably 160 g/m² or less, and even more preferably 150 g/m² or less. Preferably, the paper substrate has a basis weight of 20 to 250 g/m², preferably of 30 to 200 g/m², more preferably of 40 to 200 g/m²; or preferably, the paper substrate has a basis weight of 30 to 150 g/m², and more preferably of 40 to 150 g/m². The paper substrate typically has an average thickness of from 30 µm to 150 µlm, preferably from 40 µm to 120 µm, even more preferably from 45 µm to 80 µm and most preferably about 65 µm from the viewpoint of achieving excellent mechanical reinforcement properties. When the basis weight and thickness of the paper substrate is within the above limits, the mechanical properties of the final packaging material are improved.

In a preferred embodiment, the paper substrate is calendered and/or supercalendered. To be specific, the paper substrate may be calendered, supercalendered or the paper substrate is both calendered and supercalendered. More preferably, the paper substrate is calendered and/or supercalendered prior to coating the base paper with the coating composition according to the invention.

A preferred step of calendering and/or supercalendering the base paper in a method of manufacturing the packaging material according to the present invention is described below.

### Coating

The packaging material 100 of the present invention comprises a coating 102 that is coated on at least the first side or the second side of the paper substrate 101 described above. The coating 102 according to the invention may also be referred to as coating layer. The coating comprises C₆-C₁₈ alkenyl succinic anhydride modified starch, platy pigment having an average aspect ratio of 100-3000 and optionally plasticizer as described below in further detail.

Preferably, the coating 102 is coated on the entire surface of at least the first or the second side of the paper substrate 101. Further, in a preferred embodiment, the coating 102 is coated onto the first side but not onto the second side of the paper substrate 101 in line with the embodiment shown in Figure 1. However, according to another (non-represented) embodiment, the coating 102 can be coated onto the first and the second side of the paper substrate 101.

The basis weight of the coating layer is preferably 3.0 g/m² or more, more preferably 4.0 g/m² or more, more preferably 5.0 g/m² or more, and preferably 20 g/m² or less, more preferably 15 g/m² or less. The coating layer typically has an average thickness of from 1 µm to 20 µm, preferably from 3 µm to 15 µm from the viewpoint of achieving excellent mechanical reinforcement properties. A basis weight and thickness of the coating layer within the above ranges is advantageous in that a packaging material 100 having exceptionally good multi-barrier properties is provided, while still ensuring a good recyclability.

In a preferred embodiment, the coating comprises 40-85 wt%, preferably 45-75 wt%, and more preferably 50-65 wt% of C₆-C₁₈ alkenyl succinic anhydride modified starch; and 10-45 wt%, preferably 15-35 wt% and more preferably 20-30 wt% of platy pigment; and 0-35 wt%, preferably 5-30 wt%, more preferably 10-25 wt%, and even more preferably 15-20 wt% of plasticizer, each based on the total dry weight of the coating. When the coating comprises C₆-C₁₈ alkenyl succinic anhydride modified starch and the platy pigment within the above ranges, barrier properties of the packaging material are further improved. The addition of a plasticizer within the above limits helps to improve processibility of the coating composition but limits the barrier properties of the packaging material. It is therefore preferable to maintain the content of the plasticizer as low as possible.

The C₆-C₁₈ alkenyl succinic anhydride modified starch in the coating according to the invention refers to a chemically modified starch that is obtained from an ester-modification (hereinafter also referred to as esterification) of a native starch polymer backbone with a C₆-C₁₈ alkenyl succinate substituent in the presence of an aqueous sodium hydroxide solution. By way of example, the reaction scheme for preparing C₈ alkenyl succinic anhydride modified starch is shown in Figure 2a.

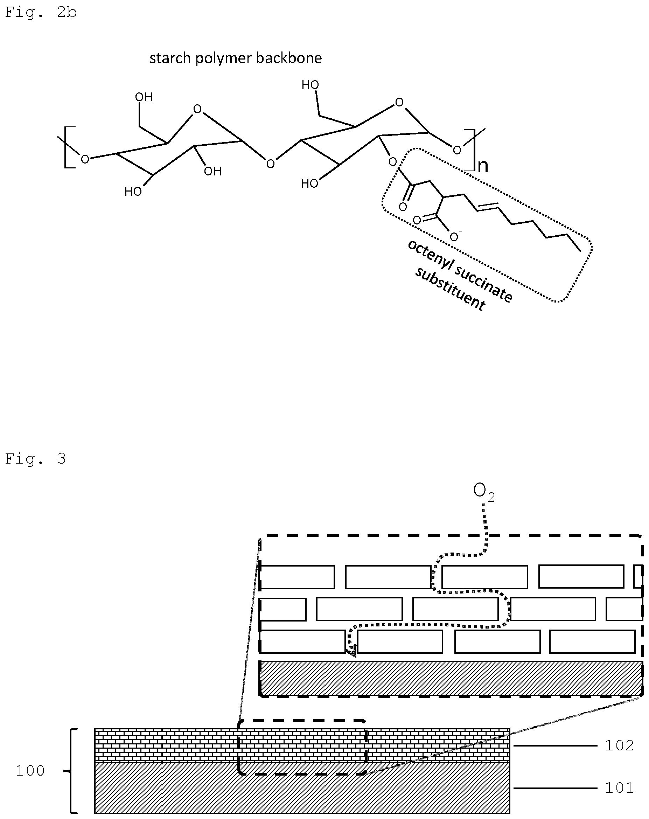

Native starch, like cellulose, is highly hydrophilic. By chemically modifying native starch with a C₆-C₁₈ alkenyl succinate substituent, a hydrophobic moiety (see alkenyl chain in Fig. 2b) and an anionic moiety (see carboxylate group in Fig. 2b) are introduced to the starch. Figure 2b schematically illustrates the different moieties using the example of C₈ alkenyl succinic anhydride modified starch. However, the introduction of hydrophobic moieties may likewise be achieved with a C₆, C₇ or C₉-C₁₈ alkenyl succinate substituent. Expressed differently, a chain length of at least 6 carbon atoms is suitable for introducing a hydrophobic moiety and choosing a chain length of 18 carbon atoms or less ensures that the alkenyl succinate substituent can still be handled in terms of the esterification.

In a particularly preferred embodiment, the C₆-C₁₈ alkenyl succinic anhydride modified starch in the coating according to the invention is C₈ alkenyl succinic anhydride modified starch, also called octenyl succinic anhydride modified starch.

With reference to Figures 3a/b, the term "C₆-C₁₈ alkenyl" as used herein refers to an C₆-C₁₈ hydrocarbon alkene group missing one hydrogen at a terminal carbon atom being attached to the starch polymer backbone via the succinate group. The term "alkene" refers to a hydrocarbon containing a carbon-carbon double bond (i.e., being unsaturated). The C₆-C₁₈ alkenyl group according to the invention comprises 6 to 18 carbon atoms in a straight-chain. The straight-chain may be optionally substituted. The term "optionally substituted" as used herein means that the group referenced is either unsubstituted or is substituted by one or more substituents. Unless specified otherwise, the term "substituted" as used herein means substitution by any substituent selected from the group consisting of a methyl, an ethyl, a propyl, a hydroxyl or a halogen atom such as F, Cl, Br, and I. Where the C₆-C₁₈ alkenyl group according to the invention comprises a methyl, an ethyl, or a propyl substituent, those C₁-C₃ groups are present in addition to the 6 to 18 carbon atoms in a straight-chain, i.e. resulting in a branched chain. Preferably, the C₆-C₁₈ alkenyl group according to the invention does not comprise any substituents. According to a preferred embodiment, the C₆-C₁₈ alkenyl succinic anhydride modified starch is a C₈ alkenyl succinic anhydride modified starch.

In a preferred embodiment, the C₆-C₁₈ alkenyl succinic anhydride modified starch has a weight average molecular weight (Mw) of 450.000 to 1.400.000 g/mol. Alternatively, the C₆-C₁₈ alkenyl succinic anhydride modified starch may have a Mw of 450.000 g/mol or more, preferably of 650.000 g/mol or more, more preferably of 800.000 g/mol or more, and of 1.400.000 g/mol or less, preferably of 1.250.000 g/mol or less, more preferably of 1.000.000 g/mol or less. The Mw may be measured by gel permeation chromatography. When the Mw is within the above limits, a particularly preferred viscosity of the coating composition as described below is easily achieved. In addition, adjusting Mw of the C₆-C₁₈ alkenyl succinic anhydride modified starch to 450.000 g/mol or more limits further helps to limit penetration of the coating composition into the base paper.

In another preferred embodiment, a degree of substitution of the C₆-C₁₈ alkenyl succinic anhydride modified starch may be in a range of 0.001-0.010. A degree of substitution of 0.001-0.010 means that 0.1-1.0% of the available hydroxygroups on the starch backbone have been substituted with the C₆-C₁₈ alkenyl succinic anhydride. Alternatively, the degree of substitution may be 0.001 or more, preferably 0.002 or more, more preferably 0.004 or more, and 0.010 or less, preferably 0.009 or less, more preferably 0.008 or less, more preferably 0.006 or less. The degree of substitution may be determined by 13C-NMR coupled with 1H-13C-NMR spectroscopy. Adjusting the degree of substitution within above ranges enables the formation of steric hindrance on the starch and help closing the paper substrate and therefore provides particularly sufficient barrier properties in the packaging material according to the invention.

In a particularly preferred embodiment, the C₆-C₁₈ alkenyl succinic anhydride modified starch has a Mw and a degree of substitution within above ranges.

In yet another preferred embodiment, the C₆-C₁₈ alkenyl succinic anhydride modified starch according to the invention is prepared by chemically modifying a native starch having has an amylopectin content of from 80-100%, preferably of at least 85%, more preferably of at least 90%, and an amylose content of 20-0%, preferably of less than 15%, more preferably of less than 10%.

A "platy pigment" in the sense of the present invention is defined as a pigment that has a two-dimensional plate shape as defined above since its extension in length (I) and width (w) exceeds its height (h) significantly, rendering the height neglectable. In the present invention, a "pigment" is defined as a powder that is insoluble and chemically unreactive in water or another medium. The "platy" pigment in the coating according to the invention has an average aspect ratio of at least 50.

The platy pigment in the coating according to the invention has an average aspect ratio of 100-3000, preferably of 100 or more, more preferably of 150 or more or preferably 3000 or less. Without wishing to be bound by theory, it is believed that when a platy pigment in accordance with above definition is included into the coating of the invention, the pigment has a high degree of orientation along the coating direction. It is assumed that a layered structure as schematically illustrated in Figure 3 is formed because of this orientation. Said layered structure further reduced Bendtsen permeability of the coated packaging material as discussed below. This likely results in the high-performance multi-barrier properties of the present invention for the following reason. As illustrated in Figure 3, oxygen molecules hardly find passageways through the solid pigment bodies forming a non-porous layered structure. Those passages that are left, force oxygen molecules to take rather long ways trough the coating, which is comparable with the passage through a rather thick coating layer. Accordingly, oxygen molecules get in contact with an increased number of the C₆-C₁₈ alkenyl succinic anhydride modified starch as defined above. As the hydrophilic moieties in the modified starch according to the invention provide oxygen barrier properties a very low OTR as defined below can be achieved.

In another preferred embodiment, the platy pigment is a nanosized platy pigment that has an average particle size of 1-100 nm. The average particle size (and the average aspect ratio calculated from the particle size) correspond to those measured when dispersing the platy pigment in an aqueous solution and can be determined by using light-scattering method or laser-diffraction method according to ISO 13322-2:2021 standard. Expressed differently, the average particle size of the platy pigment may be larger, e.g. in a µm range, when measured in a solid state (usually the size specified on product sheets) than when measured in dispersion.

In yet another preferred embodiment, the platy pigment is one or more selected from the group of phyllosilicates and/or nano graphite. Phyllosilicates are a group of minerals including among others the micas, smectites, kaolinites, chlorite, serpentine, talc and clay minerals, are also known as sheet silicates. In a case where the platy pigment is selected from the group of phyllosilicates, it may more preferably be bentonite. Nano graphite within the context of the present invention corresponds to a graphite having less than 200 layers of graphene.

The plasticizer that may be optionally comprised in the coating of the invention may be selected from the group consisting of sorbitol, polyethylene glycol, glycerol, mannitol, maltitol, and/or triacetin.

The coating layer of the packaging material of the present invention may comprise additional components, such as defoamers, thickeners such as carboxymethyl cellulose, and/or crosslinking agents such as glyoxal-based compounds.

The oxygen-barrier packaging material 100 preferably has a Bendtsen porosity of 0.0 ml/min.

In a further preferred embodiment, in the packaging material of the present invention the coating is applied on a first side of the paper substrate, and the packaging material further comprises a printing layer applied on the second side of the paper substrate. Specifically, the coating is preferably applied on the first side of the paper substrate but not on the second side, and a printing layer is applied on the second side of the paper substrate. Preferably, the printing layer is applied on the entire surface of the second side of the paper substrate.

When present, the printing layer preferably comprises a binder selected from styrene butadiene-based binders (such as Styronal D 517 F produced by BASF, or L7066 from EOC), styrene acrylic-based binders (such as Acronal S360D from BASF), or starch, or starch derivative, or carboxymethyl cellulose, or a mixture thereof. The amount of binder in the printing layer is preferably 10 wt% or more, more preferably 15 wt% or more, further preferably 20 wt% or more and 60 wt% or less, preferably 50 wt% or less, more preferably 40 wt% or less with respect to the total amount of components in the printing layer. In addition, the optional printing layer preferably comprises a filler selected from calcium carbonate, clay, talc and a mixture thereof. The amount of filler in the printing layer is preferably 40 wt% or more, more preferably 50 wt% or more, further preferably 60 wt% or more and 90 wt% or less, preferably 85 wt% or less, more preferably 80 wt% or less with respect to the total amount of components in the printing layer. The optional printing layer may comprise further additives such as defoaming agents, dispersant, lubricant, crosslinker, thickener, pH modifier and gloss-imparting agents. When present, the printing layer may represent 1 wt% or more, preferably 2 wt% or more, more preferably 4 wt% or more, and 12 wt% or less, preferably 10 wt% or less, further preferably 8 wt% or less of the total weight of the packaging material 100. The basis weight of the optional printing layer may be 1 g/m² or more, preferably 2 g/m² or more, more preferably 3 g/m² or more, and 10 g/m² or less, preferably 8 g/m² or less, more preferably 6 g/m² or less.

### Physical Properties

In a preferred embodiment, the packaging material according to the invention has a MVTR of less than 15 g·m⁻²·24h⁻¹, determined according to 23°C and 50% relative humidity, and/or an OTR of less than 5 cm³·m⁻²·24h⁻¹, determined according at 23°C and 50% RH and/or a grease resistance according to KIT test of at least 7. Preferably multi-barrier properties against oxygen, grease and moisture concurrently.

The basis weight of the packaging material according to the present invention is preferably 23 g/m² or more, more preferably 30 g/m² or more, more preferably 35 g/m² or more, and even more preferably 45 g/m² or more. Furthermore, the basis weight of the packaging material according to the present invention is preferably 270 g/m² or less, more preferably 220 g/m² or less, more preferably 200 g/m² or less, more preferably 180 g/m² or less, and even more preferably 170 g/m² or less. The thickness of the packaging material according to the present invention is preferably 50 µm or more, preferably 55 µm or more, more preferably 60 µm or more, even more preferably 70 µm or more, and 400 µm or less, preferably 300 µm or less, more preferably 150 µm or less, even more preferably 100 µm or less.

### Biodegradability and Recyclability

Preferably, the packaging material of the present invention is biodegradable according to EN13432. In the context of the present invention, the term "biodegradable" is generally defined in line with EN13432 and, when applied to a material or a product, the term means that the material or the entire product will biodegrade. By "biodegrade" it is meant that the chemical structure or the material breaks down under the action of microorganisms. More specifically, a material or a product is considered "biodegradable" if at least 90 wt% of the material is converted into CO₂ under the action of microorganisms in less than 6 months as measured by the laboratory test method EN14046, thereby meeting the requirement for biodegradability according to EN13432.

The term "compostable" is generally defined in line with EN13432. In the context of the present invention, a material is "compostable" when it comprises a maximum of 10 wt% and preferably of 5 wt% of non-biodegradable components, thereby meeting EN13432. The term "compostable" when applied to a material or a product means that the material, or the entire product, will both biodegrade and disintegrate. By the term "disintegrates" it is meant that the material, or the product made from it, will physically fall apart into fine visually indistinguishable fragments, at the end of a typical composting cycle. An "industrial compostable" material may be compostable as described above in an industrial setting: The material may disintegrate and biodegrade at temperatures between 55 °C to 60 °C in less than 6 months. In detail, disintegration in an industrial setup may take less than 3 months, while biodegradation may take less than 6 months. If a material is described as "home compostable," it is compostable as described above under domestic conditions, i.e., conditions present in a domestic composter setting: The material may disintegrate and biodegrade at temperatures below 55 °C, preferably at temperatures between 10 to 45 °C and most preferably between 25 to 30 °C in less than 12 months. In detail, disintegration may take less than 6 months, while biodegradation may take less than 12 months in a domestic composter setting.

Preferably, the packaging material of the present invention is recyclable by repulping and recoverable according to EN13430 at at least 85 wt%. The term "repulping" describes a process whereby a material that has previously undergone or has been formed by at least one pulping step is subjected to a further pulping step. The term "recyclable by repulping" describes a material which can be at least partially recovered and converted into a new material or object during a repulping step. Said material may be waste product. The term "recyclable" is generally described in line with EN13430. The expression "recyclable by repulping and recoverable according to EN13430 at at least 85%" therefore describes a material, which has been formed by or otherwise undergone at least one pulping step, and from which, upon subjecting it to a further pulping step, at least 85 wt% of the material can be recovered. In a more preferred embodiment, the packaging material is recyclable by repulping and recoverable according to EN13430 at at least 90 wt%, and even more preferably at at least 95 wt%.

### Use

The packaging material according to the present invention may form a packaging for sensitive products such as food. In particular, the packaging material of the invention provides high-performance barrier coating to prevent the egress from the packaging of flavors, aromas and other ingredients of the packaged product and to prevent the ingress into the packaging of oxygen, moisture, grease and other contaminants that may deteriorate the quality of the packaged product.

Accordingly, in another aspect, the present invention is directed to the use of the packaging material as described above for food packaging. This requires that the packaging material is preferably food contact approved according to any of Regulation EC 1935/2004, BfR 36, FDA 21 CFA §176-170 & 176-180.

### Method of Manufacturing Packaging Material

The packaging material of the present invention described above is obtainable by a method for producing a packaging material according to the present invention and described herein.

The method of manufacturing the food packaging material of the present invention includes the steps of:
(a) providing the paper substrate described above,
(b) applying a coating composition on at least the first side or the second side of the paper substrate to form the coating of the invention.

In the above method, the coating composition is an aqueous composition comprising C₆-C₁₈ alkenyl succinic anhydride modified starch, platy pigment having an average aspect ratio of 100-3000 and optionally a plasticizer, each as described above. The coating composition has a Brookfield viscosity at 30 °C at 100 rpm of 200-2000 mPa·s. Preferably, the coating composition applied in step (b) has a solid content of 10-25 wt%.

The paper substrate provided in step (a) has a Bendtsen permeability of less than 20 ml/min.

Preferably the coating composition in step (b) is applied by curtain coating, film transfer coating methods, blade coating, rod coating or various gravure and flexographic coating methods.

In a preferred embodiment, the packaging material comprising the coated paper substrate according to the invention is calendered and/or supercalendered. To be specific, the packaging material may be calendered, supercalendered or both calendered and supercalendered. Calendering may be carried out by a soft calender, hard calender, shoe calender or supercalender. The number of calendering nip could be from 1 to 16. Calendering is preferably carried out by a soft calender with 4 nip, online on the paper machine. Including a calendering step may be advantageous in terms of improving the grease resistance properties of the base substrate and therefore of the packaging material. For example, a calendering step may help to achieve a denser packaging material, which may increase the grease barrier of the core material without negatively affecting the mechanical properties for converting. Further, a calendering step may improve the printability of the material. Moreover, the calandering or supercalendering of the packaging material may help to further align or orient the platy pigments present in the coating composition.

Furthermore, the paper substrate can be calandered or supercalandered before step (b). Preferably the paper substrate is calandered online by a thermo-soft calandering applying a pressure of 50 to 300 kN/m at a temperature comprised between 70°C and 220°C. This thermos-soft calandering can implement 1 to 4 nips.

### EXPERIMENTAL

### Characterization

Properties of the (un)coated samples described below were measured under the following conditions unless otherwise stated.

### Measurement methods

| **Measured property** | **Device** | **Standard** | **Conditions** | **Replication number** | **Sample size (cm²)** |
|---|---|---|---|---|---|
| Refining level of fibers used in sample (Drainability) | Schopper-Riegler | ISO 5267-1 | 2g dry fibers in 1L of water at 20°C | 2 | / |
| Viscosity | Brookfield viscosimeter | / | 100rpm / RT | 1 | / |
| Bendtsen permeability | Bendtsen Franck-PTI | ISO 5636-3 :2013 | 23°C / 50% RH / 1.47 kPa | 5 | 10x10 |
| Bendtsen roughness | Bendtsen Franck-PTI | ISO 8791-2 :2013 | 23°C / 50% RH / 1.47 kPa | 5 | 10x10 |
| OTR | Ox-Tran Mocon Model 2/22 | Internal method | 23°C / 50% RH | 2 | 6x6 |
| MVTR | LabThink Model C360M | ASTM E96 | 23°C / 50% RH | 3 | 10x10 |
| Water Cobb | / | ISO 535 | 60 seconds | 3 | 10x10 |
| Grease resistance (KIT Test) | / | Internal test adapted from TAPPI T 507 | 4 h / 60°C in oven | 3 | 10x10 |

### Examples

### EXAMPLE 1

The inventors tested the influence of the chemical modification of starch on the multi-barrier performance. In the present example, performance of a coating composition comprising a C₈ ASA modified starch according to the present invention is compared with coating compositions containing other types of chemically modified starch on a base paper substrate (Paper Substrate 1 as described below).

### Raw materials used for coating composition:

### Starch solutions

**Supplier: ^{a}Cargill, ^{b}AVEBE**

| **Reference** | **Commercial name** | **Chemical Modification** | **Solids content (wt%)** | **Cooking time (min) and Temp. (°C)** |
|---|---|---|---|---|
| Starch 1^{a} | C-Film 05773 | hydroxypropylated (etherfication) | 20 | 30 min at 95 °C |
| Starch 2 ^{a} | C-Film 07392 | dextrine (partially hydrolyzed) | 35 | 30 min at 95 °C |
| Starch 3 ^{b} | Perfectafilm X115 | acetylated (esterification) | 20 | 30 min at 95 °C |
| Starch 4 ^{a} | C-Stretch 06392 | C₈ ASA modified (esterification) | 20 | 30 min at 90 °C |

### Other solutions

**Supplier: ^{a}Corgill, ^{c}BYK**

| **Reference** | **Commercial name** | **Substance** | **Solids content (wt%)** |
|---|---|---|---|
| Plasticizer ^{a} | C*Sorbidex NC 16207 | Sorbitol | 74 |
| Platy pigment^{c} | Cloisite-Na+ | Bentonite | 7.50 |

### Coating composition preparation method:

The quantities of the respective raw materials were calculated such that all final coating compositions contain the same end concentration (solid content: 14 wt%, based on the total aqueous coating composition) and the same quantities (%) of starch : platy pigment : plasticizer of 56 : 27 : 17, based on the total solids content.

### 1. Preparation of the aqueous starch suspension:

Starch powder was added to a beaker containing the requisite amount of water, which has been set up in a double boiler (already heated at 90°C or 95°C) at medium stirring speed. The stirring speed was increased to 1500 rpm and the aqueous suspension was subjected to heating at 90°C or 95°C for a period of 30 minutes. Thereafter, the starch suspension was cooled for 1 hour at room temperature.

### 2. Preparation of the aqueous platy pigment suspension:

The platy pigment was added to the requisite amount of water, which has been set up under blade stirring. The resulting suspension was then stirred for 30 minutes at 2000 rpm.

### 3. Preparation of the coating composition:

The starch suspension obtained in step 1 was stirred for a period of 5 minutes at 3500 rpm, with the platy pigment suspension obtained in step 2 and the requisite amount of water. Subsequently, the plasticizer was added, and the total composition was stirred for another period of 5 minutes to prepare Coating Compositions 1-4.

### Viscosities of aqueous Coating Compositions 1-4

| **Reference** | **Starch** | **Chemical Modification** | **Brookfield viscosity (mPa·s)** |
|---|---|---|---|
| Coating Composition 1 | Starch 1 | hydroxypropylated (etherfication) | 3700 |
| Coating Composition 2 | Starch 2 | dextrine (partially hydrolyzed) | 160 |
| Coating Composition 3 | Starch 3 | acetylated (esterification) | 498 |
| Coating Composition 4 | Starch 4 | C₈ ASA modified (esterification) | 820 |

### Coating of paper substrate:

The above Coating Compositions 1-4 were applied to Paper Substrate 1 (described below) using a hand coater with film applicator. The samples were then dried at 105°C during 3 minutes to give coated Packaging Material Samples 1.1-1.4. The hand coater with film applicator is a laboratory device enabling to coat compositions having a high viscosity (comprised between 200 and 2000 mPa·s), at an industrial scale for coating compositions having a high viscosity the man skilled in the art can use curtain coating, film transfer coating methods, blade coating, rod coating, or various gravure and flexographic coating methods.

### Results:

As shown in the following table, Sample 1.4, containing C₈ ASA modified starch according to the present invention provides multi-barrier performance, including oxygen barrier properties. The uncoated Sample 1.0 (i.e., Paper Substrate 1) is not resistant to oxygen, moisture or grease. Samples 1.1-1.3, comprising coating compositions containing other types of chemically modified starch, do not show oxygen resistance but only grease and moisture resistance. These results reflect the state of the art as discussed above, providing grease and moisture barrier properties, but lacking oxygen barrier properties, which limits their use in applications requiring high-performance multi-barrier packaging.

### Physical properties of uncoated Paper Substrate Sample 1.0 and coated Packaging Material Samples 1.1-1.4

| **Reference** | **Coating Compositio n** | **Coatweight (g/m²)** | **OTR (cm³/m2·24 h)** | **MVTR (g/m2·24h)** | **Grease resistance according to KIT test (Rating from 0 to 14)** |
|---|---|---|---|---|---|
| Sample 1.0 | - | - | >5000 | 69 | 2.0 |
| Sample 1.1 | 1 | 12 | 1713 | 5.1 | 12.7 |
| Sample 1.2 | 2 | 12 | >5000 | 10.2 | 10.5 |
| Sample 1.3 | 3 | 12 | >5000 | 6.7 | 12.5 |
| Sample 1.4 | 4 | 12 | 0.2 | 10.4 | 12.3 |

### EXAMPLE 2

As confirmed by Example 1, oxygen barrier properties, i.e. a low OTR, are the most difficult to achieve for a paper-based packaging material that does not contain petrol-based components or metallic laminates. In the present example, the inventors therefore tested influence of the base paper substrate on the OTR by applying Coating Composition 4 (described above) on different paper substrates.

### Base paper substrates used for coating:

**Paper Substrate 1** is a fine paper comprising a blend of 60% long fibers (softwood) and 40% short fibers (hardwood). The fibers forming the paper substrate are bleached and the paper substrate is pre-coated with a clay-based coating (6 g/m²).

**Paper Substrate 2** is a kraft paper comprising a blend of 55% long fibers (softwood) and 45% short fibers (hardwood).

**Paper Substrate 3** is a fine paper comprising a blend of 25% long fibers (softwood) and 85% short fibers (hardwood). The fibers forming this paper substrate are bleached, and the Paper Substrate 3 is machine calendered.

**Paper Substrate 4** is a fine paper comprising a blend of 35% long fibers (softwood) and 35% short fibers (hardwood). The fibers forming this paper substrate are bleached, this Paper Substrate 4 is further surface sized/pigmented, and super calendered.

**Paper Substrate 5** is a fine paper comprising 100% long fibers (softwood). The fibers forming this paper substrate are bleached and the Paper Substrate 5 is super calendered.

**Paper Substrate 6** is a fine paper comprising a blend of 45% long fibers (softwood) and 55% short fibers (hardwood). The fibers forming this paper substrate are bleached, and this Paper Substrate 6 is surface sized/pigmented and machine calendered.

**Paper Substrate 7** is a fine paper comprising a blend of 50% long fibers (softwood) and 50% short fibers (hardwood). The fibers forming this paper substrate are bleached and the Paper Substrate 7 is surface sized.

### Physical properties of uncoated Paper Substrates 1-7

| **Reference** | **Basis weight (g/m²)** | **Bendtsen roughness (ml/min)** | **Bendtsen permeability (ml/min)** | **Water Cobb (g/m²)** | **OTR (cm3/ m²·24h)** | **Refining level (SR°)** |
|---|---|---|---|---|---|---|
| Paper Substrate 1 | 65 | 203 | 0 | 4 | >5000 | 55-60 |
| Paper Substrate 2 | 58 | 179 | 20 | 62 | >5000 | 40-50 |
| Paper Substrate 3 | 58 | 134 | 13 | 48 | >5000 | 55-60 |
| Paper Substrate 4 | 66 | 128 | 0 | 24 | >5000 | 60-70 |
| Paper Substrate 5 | 50 | 50 | 0 | 28 | >5000 | 65-80 |
| Paper Substrate 6 | 70 | 66 | 0 | 23 | >5000 | 55-60 |
| Paper Substrate 7 | 63 | 356 | 0 | 30 | >5000 | 65-80 |

### Coating of paper substrates:

Coating Compositions 4 was applied to the above Paper Substrates 1-7 by the method of Example 1 to give coated Packaging Material Samples 1.4-7.4.

### Results:

As shown in the following table, the coating comprising a C₈ ASA modified starch and a platy pigment according to the present invention drastically reduced the OTR values of Paper Substrates 1, 3, 4, 5, 6 and 7 (all above 5000 cm³/m²**·**24h) to 0.4 cm³/m²**·**24h and lower in Packaging Material Samples 1.4, 3.4, 4.4, 5.4, 6.4 and 7.4. Comparing Packaging Material Sample 2.4 with the other samples, reduction of the OTR value of Paper Substrate 2 was less drastic (OTR value remained above 300 cm³/m²**·**24h).

The Bendtsen permeability of the paper substrate used has a significant impact on the oxygen barrier properties of the coated packaging material. As discussed above, and without wishing to be bound by theory the lower the Bendtsen permeability of the paper substrate, the more homogeneous the mixture of modified starch and platy pigment and the better the orientation of the platy pigment in this mixture along the coating direction, i.e. parallel to the base paper, which effectively reduces the Bendtsen permeability in the coated packaging material, thereby achieving high-performance oxygen barrier properties. Other factors that influence the Bendtsen permeability of the paper substrate, and therefore indirectly the oxygen barrier properties of the packaging material, are the refining level and the Cobb value as discussed in the description.

### Physical properties of coated Packaging Material Samples 1.4-7.4

| **Reference** | **Paper Substrate** | **Coat weight (g/m²)** | **Bendtsen permeability (ml/min)** | | **OTR (cm³/m2·24h)** | |
|---|---|---|---|---|---|---|
| | | | **Before** | **After** | **Before** | **After** |
| Sample 1.4 | 1 | 12 | 0.0 | 0.0 | >5000 | 0.2 |
| Sample 2.4 | 2 | 16.3 | 20 | 0.0 | >5000 | 389 |
| Sample 3.4 | 3 | 17.5 | 13 | 0.0 | >5000 | 0.2 |
| Sample 4.4 | 4 | 12 | 0.0 | 0.0 | >5000 | 0.0 |
| Sample 5.4 | 5 | 10 | 0.0 | 0.0 | >5000 | 0.4 |
| Sample 6.4 | 6 | 8.5 | 0.0 | 0.0 | >5000 | 0.4 |
| Sample 7.4 | 7 | 8 | 0.0 | 0.0 | >5000 | 0.0 |

### EXAMPLE 3

The inventors tested the influence of the aspect ratio of the pigment on oxygen and moisture resistance. In the present example, performance of Coating Composition 4, including a platy pigment (average aspect ratio of 200-300), is compared with a Coating Composition 5 comprising a non-platy pigment (average aspect ratio of 30) on Paper Substrate 1. Coating Composition 5 was prepared as described in Example 1 with the following composition and then applied on Paper Substrate 1 by the method of Example 1. The Coating Composition 5 has been coated on Paper Substrate 1 in an amount of 12 g/m²; the Brookfield viscosity of this Coating Composition 5 is of only 115 mPa**·**s

### Composition of Coating Composition 5

**Supplier: ^{a}Cargill, ^{d}Elementis**

| **Reference** | **Commercial name** | **Substance** | **Solids content (wt%)** | **%** |
|---|---|---|---|---|
| Starch 4 ^{a} | C-Stretch 06392 | C₈ ASA modified starch | 20.9 | 56 |
| Non-platy pigment ^{d} | FinnTalc C15B | Talc | 8.3 | 27 |
| Plasticizer ^{a} | C*Sorbidex NC 16207 | Sorbitol | 74 | 17 |

### Results:

As shown in the following table, Sample 1.4 including an inventive coating composition containing a platy pigment (average aspect ratio of 200-300) provides oxygen and moisture resistance. Sample 1.5, including a coating composition that contains a non-platy pigment (average aspect ratio of 30), does not show oxygen resistance and performs significantly worse in terms of moisture resistance (also in comparison to Samples 1.1-1.3 described above). The uncoated Sample 1.0 (i.e., Paper Substrate 1) shows neither oxygen nor moisture resistance. Without wishing to be bound by theory, it is believed that a platy pigment in the sense of the present invention forms a layered structure in the coating layer that elongates the passage time of oxygen molecules trough the coating further comprising the C₆-C₁₈ alkenyl succinic anhydride modified starch having hydrophilic moieties and results in improved oxygen barrier properties.

### Physical properties of uncoated paper Sample 1.0 and coated Packaging Material Samples 1.4-1.5

| **Reference** | **Paper Substrate** | **Coating Composition** | **OTR (cm³/m2·24h)** | **MVTR (g/m2·24h)** |
|---|---|---|---|---|
| Sample 1.0 | 1 | - | >5000 | 69 |
| Sample 1.4 | 1 | 4 | 0.2 | 10.4 |
| Sample 1.5 | 1 | 5 | >5000 | 27.9 |

## Claims

1. A packaging material comprising:
a **paper substrate** having a first side and a second side, the second side being opposite to the first side, wherein the paper substrate has a Bendtsen permeability of less than 20.0 ml/min, and
a **coating** being coated on at least the first side or the second side of the paper substrate, wherein the coating comprises C₆-C₁₈ alkenyl succinic anhydride modified starch, platy pigment and optionally plasticizer, wherein the platy pigment has an average aspect ratio of 100-3000.

2. Packaging material of claim 1, wherein the coating comprises 40-85 wt% of C₆-C₁₈ alkenyl succinic anhydride modified starch, 10-45 wt% of platy pigment, and/or 0-35 wt% of plasticizer, each based on the total dry weight of the coating.

3. Packaging material according to any of the preceding claims, wherein the platy pigment has an average particle size of 1-100 nm.

4. Packaging material according to any of the preceding claims, wherein the platy pigment is selected from phyllosilicate and/or nano graphite.

5. Packaging material according to any of the preceding claims, wherein the plasticizer is selected from sorbitol, polyethylene glycol, glycerol, mannitol, maltitol, and/or triacetin.

6. Packaging material according to any of the preceding claims, wherein the C₆-C₁₈ alkenyl succinic anhydride modified starch has a weight average molecular weight (Mw) of 450.000-1.400.00 g/mol, and/or a degree of substitution of 0.001-0.010.

7. Packaging material according to any of the preceding claims, wherein the C₆-C₁₈ alkenyl succinic anhydride modified starch is C₈ alkenyl succinic anhydride modified starch.

8. Packaging material according to any of the preceding claims, wherein the paper substrate has a basis weight of 20-250 g/m², and/or the coating has a basis weight of 3-20 g/m².

9. Packaging material according to any of the preceding claims, wherein the paper substrate has a Bendtsen permeability of 15.0 ml/min or less, and/or a Bendtsen roughness of less than 400 ml/min, preferably less than 250 ml/min, and/or a Cobb at 60 seconds, determined according to ISO 535, of 50 g/m² or less, preferably of less than 35 g/m².

10. Packaging material according to any of the preceding claims, wherein the packaging material has a moisture vapor transmission rate (MVTR), determined at 23°C and 50% RH, of less than 15 g.m⁻²**·**24h⁻¹, and/or an oxygen transmission rate (OTR), determined at 23°C and 50% RH, of less than 5 cm³**·**m²**·**24h⁻¹, and/or a grease resistance according to KIT test of at least 7.

11. Packaging material according to any of the preceding claims, wherein the packaging material is biodegradable according to EN13432, and/or recyclable according to EN13430.

12. Packaging material according to any of the preceding claims, forming a packaging.

13. Packaging material according to any one of the preceding claims, wherein the packaging material has a Bendtsen permeability of 0.0 ml/min.

14. Use of the packaging material according to any of the preceding claims for food packaging.

15. Method of manufacturing a packaging material as defined in any of the preceding claims comprising the steps of:
(a) providing the **paper substrate,**
(b) applying a coating composition on at least the first side or the second side of the paper substrate to form the **coating,**
wherein the coating composition is an aqueous composition having a Brookfield viscosity at 30 °C at 100 rpm of 200-2000 mPa**·**s, and comprising C₆-C₁₈ alkenyl succinic anhydride modified starch, platy pigment having an average aspect ratio of 100-3000 or a precursor thereof, and optionally a plasticizer.

16. Method of claim 15, wherein in step (b) the coating composition is applied by curtain coating, film transfer coating methods, blade coating, rod coating, or various gravure and flexographic coating methods.
